# EUROPEAN PATENT APPLICATION

(11) **EP 1 059 595 A1**
(43) Date of publication of application: **13.12.2000**
(21) Application number: 00111327.3
(22) Date of filing: 26.05.2000
(51) Int. Cl.: G06F 17/60

(54) **Policy-driven caching and resolution of dynamic properties in virtual market places**

(30) Priority: 11.06.1999 EP 99111403
(71) Applicant: International Business Machines Corporation, Armonk, NY 10504 (US)
(72) Inventor: Facciorusso, Christian, 8134 Adliswil (CH); Field, Simon, 8134 Adliswil (CH); Hoffner, yigal, 8041 Zürich (CH); Schade, Andreas, 8134 Adliswil (CH)
(74) Representative: Klett, Peter Michael

(57) **Abstract**

A computerized method is provided which enables Dynamic Property values to remain valid for some time after they have been computed, thus avoiding recomputation and inconsistencies. The method caches Dynamic Property values and associates them with a certain caching policy which determines if the cached value is valid. In a first step at system initialization time, Dynamic Properties are specified in terms of their name, their type, the DPE used for computation, and a set of actual parameters needed to exercise this computation. In a second step at run-time, if the policy indicates that the cached value is still valid, the following additional data is stored: (a) the previously computed value, and (b) the caching or expiration policy for the cached data. In a third step at run-time, if the policy indicates that the cached value is expired, the value is computed again.

## Description

### Background of the Invention

The invention relates to methods for facilitating e-commerce and, more specifically, to methods which allow customers using Virtual Market Places to search for offers in a huge offer-space populated by various providers. This search is targeted at narrowing down the offer-space to a set of offers that match the customer's requirements. Conversely, for certain offer types, especially non-product service-oriented offers, it is necessary to filter potential clients by matching requirements associated with the service offer against client properties. This is implemented by a match-making facility (an entity with the purpose of matching client constraints with offer properties and offer constraints against client properties) which initiates a match-making process at the heart of any Virtual Market Place architecture. The match-making process is triggered when a client sends his requirements along with his properties to the market place in which the available offers are stored at some match-making facility.

Properties of clients and offers are represented as typed name-value lists. Each property is referred to by a unique property name. The property itself has a certain type such as integer, string or a more complex structured type, and an associated value. The set of all properties associated with a particular client is called a property set for the client. These property sets are stored at a match-making facility to be used when a client searches for a certain set of offers. The values of the properties are usually specified at export time, that is when the provider advertises them at a match-making facility. Those properties are called static properties.

The value of dynamic properties will be computed at match-making time rather than at export time. As opposed to static properties for which the values are provided at export time, dynamic properties are specified by providing an identification of a computation algorithm, such as a reference to a Dynamic Property Evaluator (DPE) and a set of optional parameters required for the computation. At match-making time the match-making facility (in terms of ODP/CORBA as described in *Object Management Group: The Common Object Request Broker**ÿ**: Architecture and Specification*, Revision 2.0, 1995 and the trader as described in *Object Management Group: CORBA Trading Service*, Doc. no. Orbos/06-05-06, 1996) will trigger the evaluation of any dynamic properties found and then use the computed values for the match-making process.

Traditionally, client or offer constraints are represented by Boolean expressions over properties values. Therefore, constraints correspond to logical forms that do not have a logical value themselves. They can only be evaluated to a logical value if values for the variables are supplied, that is, the logical form of the constraint is applied to a certain property set.

Evaluating a constraint means to apply its logical form to a set of properties and to assemble the values returned. Properties are referred to by their name (identifier) in a constraint expression. If the property is static, its value can be retrieved right away. In the case of a Dynamic Property the computation process has to be initiated by invoking the DPE.

Dynamic Properties can be referred to more than only once in a constraint expression. This would lead to multiple evaluation of the Dynamic Property computation algorithm. However, the prior art does not permit Dynamic Properties to remain valid after their calculation for access during the evaluation of other constraint expressions. Therefore, what is needed is a method enabling Dynamic Property values to remain valid for some time after they have been computed, thus avoiding unnecessary recomputation as well as facilitating special offers which are only available for a certain period.

### Summary of the Invention

A computerized method is provided which enables Dynamic Property values to remain valid for some time after they have been computed, thus avoiding recomputation. The method caches Dynamic Property values and associates them with a certain caching policy which determines if the cached value is valid.

In a first step, before run-time of the match-making engine, Dynamic Properties are specified in terms of their name, their type, the DPE used for computation, and a set of actual parameters needed to exercise this computation. In a second step, at match-making time, if the policy indicates that the cached value is still valid, the following additional data is stored (a requirement of Caching Dynamic Property values): (a) the previously computed value (cache), (b) the Expiration Policy for the cached data. In a third step, also at match-making time, if the policy indicates that the cached value is expired, the value is computed again.

### Brief Description of the Drawings

FIG. 1 is a flow diagram of the method of the invention.
FIG. 2 is a data structure used in the method of the invention.
FIG. 3 is pseudo-code listing for an Immediate Property Resolution Algorithm.
FIG. 4 is a pseudo-code listing for a Deferred Property Resolution Algorithm.
FIG. 5 is a pseudo-code listing which shows how validity expressions are set.

### Detailed Description of the Invention

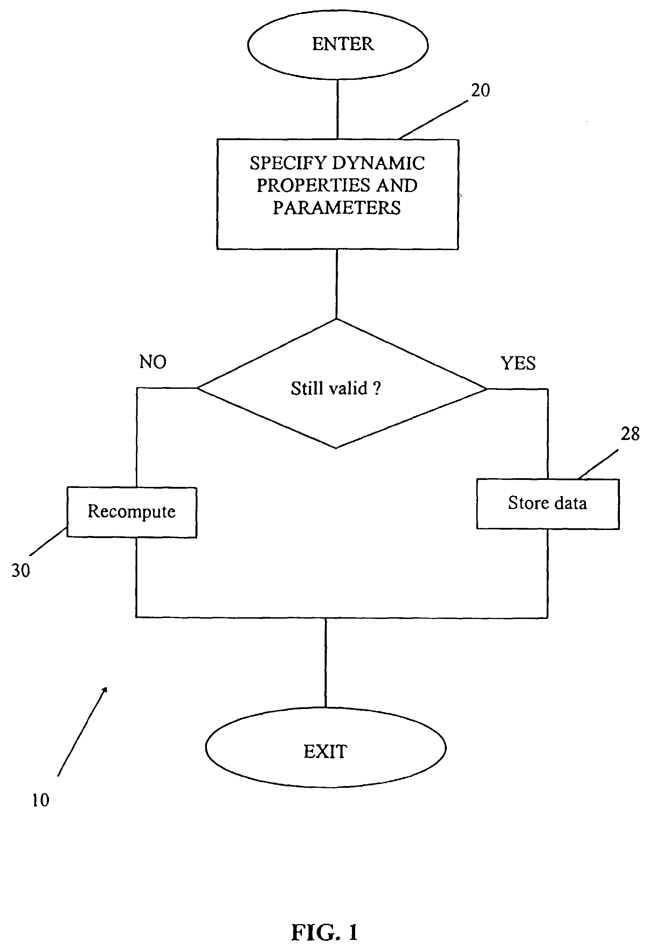

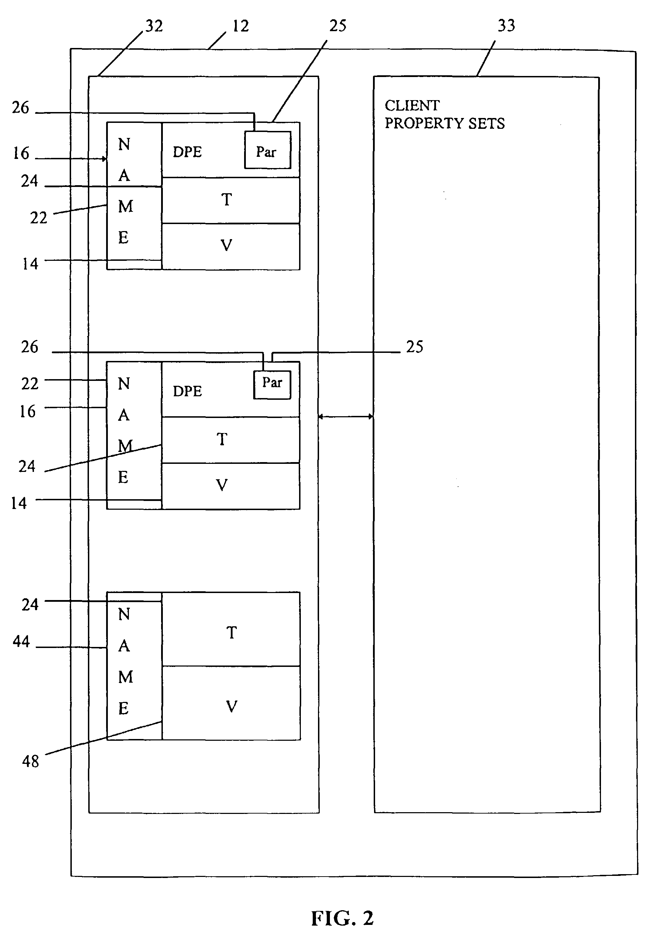

Referring now to FIGS. 1 and 2, a flow diagram of a computerized property resolution method 10 and an associated data structure 12 are shown. The method 10 enables dynamic values 14 (values of dynamic properties 16) to remain valid for some time after they have been computed, thus avoiding recomputation and inconsistencies due to multiple evaluation of computation algorithms which may have been changed in the meantime. The method 10 caches the values 14 and associates them with a certain caching policy (e.g., an expiration policy) which determines if the cached value is valid.

In a first step 20 taking place at initilization time (before run-time of the match-making engine), dynamic properties 16 are specified in terms of their name 22, their type 24 (such as whether it is an integer, string, or complex data type), the DPE 25 used for computation, and a set of actual parameters 26 needed to exercise this computation. Note that the specification of dynamic properties is done when the match-making facility is populated with offers before any match-making is conducted. In a second step 28, taking place at match-making time, if the policy indicates that the cached value 14 is still valid, the following additional data, necessary to cache these values, is stored: (a) the previously computed value; and (b) the caching policy for the cached data. Note that it is not necessary to have a step which stores the time the cached value was computed if expiration policies denoting a validity duration are rewritten into policies denoting an expiration point in time, which is always possible. This is an optimization in terms of memory consumption as well as a generalization in terms of implementing the disclosed data. In a third step 30, also taking place at match-making time, if the policy indicates that the cached value 14 is expired, the value is computed again.

A data structure 12 stores dynamic properties 16 and related data for access as required during an evaluation of a constraint in the virtual market place in an effort to match clients with offers. The data structure 12 includes offer property sets 32 and client property sets 33. The offer property sets 32 include dynamic properties 16 and static properties 44 of the corresponding offer. The dynamic properties 16 are used to describe offers and are therefore found in the offer property sets 32. Each dynamic property 16 has an associated name, a dynamic property evaluator reference 25, associated parameters 26, a type 24, and a value 14. The static properties 44 have a name, a type 24 and a value 48. The client property sets 33 include static properties 44 and, possibly, dynamic properties 16 for each client. Each client property set 33 may include static and/or dynamic name-value lists, respectively.

The method 10 of the invention follows the following rules:
Rule one: a dynamic property 16 is evaluated only if
   a: its value 14 is not cached, or
   b: the cached value is not valid anymore.
Rule two: The dynamic property 16 is evaluated at most once for a given constraint.

Rule two is important as it handles the case in which a dynamic property 16 is used more than once in a constraint and the validity of its cached value 14 expires during the evaluation of the constraint. This rule therefore guarantees that the value 14 is consistent and up to date for a given constraint.

The expiration policy can be any expression that limits the validity of the cached value 14 of the dynamic property 16. It is an expression that defines one or more validity intervals in which a cached value 14 can be used. Expiration policies are specified using constructs in a policy specification language. This language is well-known in the art and is described in, for instance, Stephen R. Bourne, *The UNIX V Environment*. Bell Telephone Laboratories, Inc. 1987, for UNIX System V crontab files. The simplest cases are policies which specify exactly one validity interval. Examples of what can be expressed in such a language are given below:
- The period of time in which the cached value 14 is valid. Assuming a value v was computed at time t₀ and the expiration policy is *ValidFor(p)*, the validity interval is then 〈t₀, t₀ + p〉.
- A point in time when the cached value expires. If the expiration policy is *ValidUntil(t*₁*)*, the validity interval is then 〈t₀, t₁ 〉.

Expiration policies can also be more complex specifying a recurring validity interval for a cached value 14. These policies, for instance, would be used to express special offers which are valid only in November each year.

A constraint is evaluated over a property set 32 which represents the actual parameters 26 for the logical form of the constraint. Any dynamic property 16 in the property set 32 must be computed before its value 14 can be used when evaluating the constraint. Property sets 34 can be handled in two ways :
(1) In a first embodiment 40 of the method 10, called immediate property resolution, all dynamic property values 14 are computed first. The property set 32 can then be passed as a list of named values to the constraint.
(2) In a second embodiment 42 of the method, called deferred property resolution, property values 14 are not precomputed but passed as references instead. Dynamic Properties 16 are only computed if they are used in the constraint, that is the constraint refers to their name.

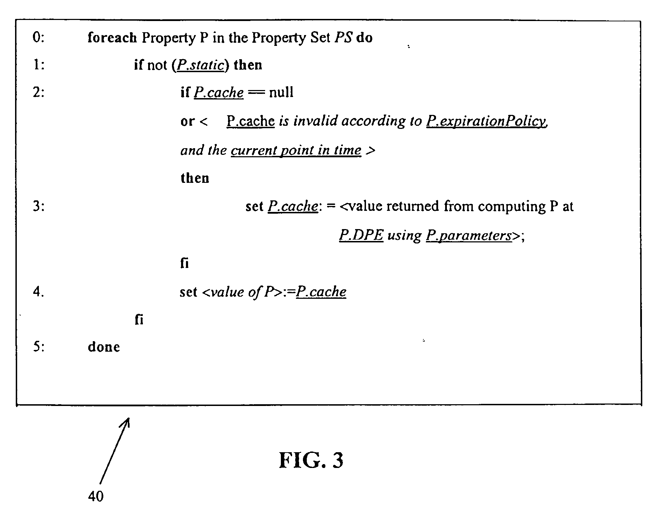

Referring now to FIGS. 2 and 3, which lists the pseudo code for the immediate property resolution method 40, it is assumed that both static and dynamic properties 44 and 16, respectively, are represented by the data structure 12. For any property *P*, the Boolean attribute *P.isStatic* indicates (value "true") that the property is static, or dynamic (value "false"). This is defined when properties available in the virtual market place are specified.

For a Dynamic Property *P*:
- The attribute *P.DPE* identifies the DPE used to compute the dynamic property value 14.
- The attribute *P.parameters* represents the list of parameters 26 need to compute the property value 14.
- The attribute *P.cache* represents the cached property value 14.
- The attribute *P.expiration Policy* represents the expiration policy expression associated with the cached value 14, but, as mentioned above, the storage of the point in time is not necessary if expiration policies denoting a validity duration are rewritten into policies denoting an expiration point in time.

In the immediate property resolution method 40, property values 14 are resolved before evaluating the constraint. The method 40 includes the following steps which are performed for each Property *P* in the Property Set *PS*. In step one, if *P* is a static property, continue the next property *P* in the Property Set *PS*. Otherwise continue with step two. In step two, if there is no cached value for *P* or *P's* Expiration Policy with respect to the current point in time indicates that the cached value for *P* is invalid, continue with step three; otherwise continue with step four. In step three, evaluate the Dynamic Property *P* and cache its value. In step four, set *P'*s value to the cached value 14. In step five, go to step one using next property *P* in the Property Set *PS*.

Note that step two involves the evaluation of the expiration policy expression. This is done by interpreting the expression using the current time which yields a Boolean value. Note also that the computation of *P* is considered atomic, that is step three does not take any time. Thus, step three and step four are exercised at the very same point in time.

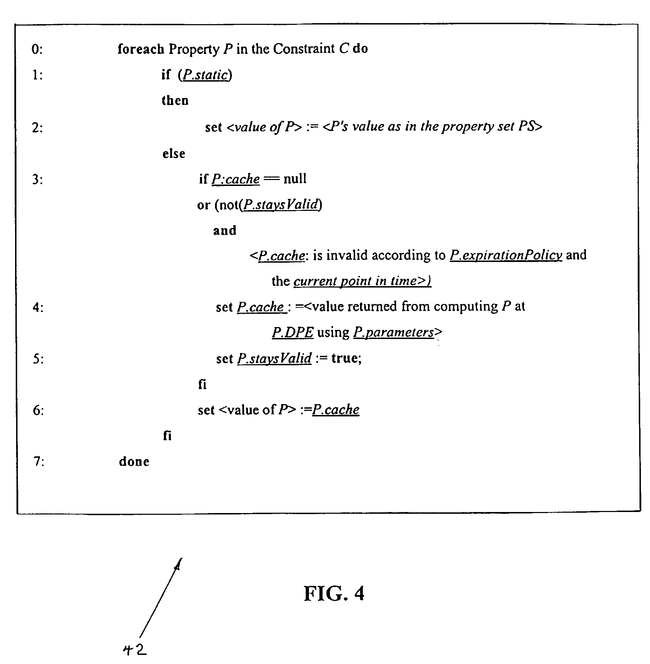

Referring now to FIG. 4 which lists the pseudo code of the deferred property resolution method 42, properties are passed by reference when the constraint is to be evaluated. Static properties 44 are handled as in the immediate resolution method 40 since their value 48 is already known.

The situation for dynamic properties 16 is different, however. This is due to the fact that the same dynamic property 16 can be referred to more than once in the constraint which would trigger the value resolution multiple times. Caching a dynamic property value 14 is also more difficult as the cached value can expire while the constraint is being evaluated.

The deferred property resolution method 42 applies the same rules as the immediate embodiment 40, namely that a dynamic property 16 is evaluated at most once when a constraint is evaluated. This is achieved by extending the validity of the cached dynamic property value 14 until the evaluation of both the client and the offer constraint terminates. For this reason, it is assumed that the dynamic property representation *P* is extended by an additional Boolean attribute *P.staysValid* which, when set, indicates that the cached value 14 remains valid throughout the rest of constraint evaluation.

As shown in FIG. 4, the deferred property resolution method 42 includes the following steps, which are performed for each Property Reference *P* in the Constraint *C*. In step one, if *P* is a static property 44, continue with step two, otherwise with step three. In step two, use the static value 48 and evaluate the next Property Reference *P* in Constraint *C*. In step three, if there is already a cached value for *P*, and *P'*s validity extension indicator is set or *P'*s expiration Policy with respect to the current point in time indicates that the cached value for *P* is valid, continue with step six. In step four, evaluate the Dynamic Property *P* and cache its value. In step five, set the validity extension indicator for *P*; continue with step seven. In step six, set *P'*s value to the cached value. In step seven, continue with the next Property Reference.

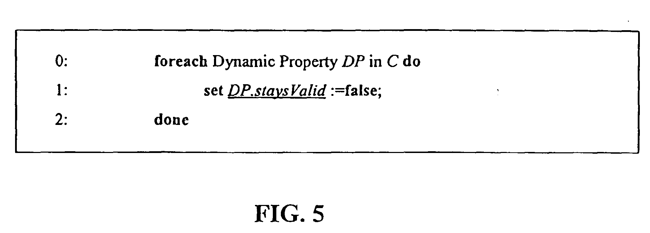

At the end of the evaluation of constraint C the *stays Valid* attributes indicating the possible validity extension of the cached values will be reset for each dynamic property (as shown in FIG. 5).

In an embodiment of the invention, a medium is statically or dynamically encoded with the method 10, the medium including a disc or other storage medium such as a cache, RAM, or a signal, such as that received and transmitted when a client or vendor is connected to a server on the Internet in which the server provides user access to the method.

In an advantage of the method 10, computer resources required to determine acceptable matches in Virtual Market Places is considerably reduced. This therefore frees up existing resources to perform other tasks, should they be required. Concomitantly, access time, download time and transmission time on the Internet or other network is reduced.

Although illustrative embodiments of the method 10 have been shown and described, a wide range of modification, change, and substitution is contemplated in the foregoing disclosure and in some instances, some features of the present invention may be employed without a corresponding use of the other features. Accordingly, it is appropriate that the appended claims be construed broadly and in a manner consistent with the scope of the invention.

## Claims

1. A computerized property resolution method (10) for matching potential clients and offers of products or services, the method encoded on a computer-readable medium wherein values (14) of dynamic properties (16) are cached and associated with a certain caching policy which determines if the cached value (14) is valid thus enabling the values to remain valid for some time after they have been computed and avoiding unnecessary recomputation and inconsistencies.

2. The method of claim 1, comprising the steps of:
(a) at initialization time, specifying dynamic properties (16) in terms of their name, their type (24), the DPE used for computation, and a set of actual parameters (26) needed to exercise this computation;
(b) at match-making time, if the policy indicates that the cached value (14) is still valid, the following additional data is stored:
(i) the previously computed value (14) which was cached; and
(ii) the caching policy associated with the cached value; and
(c) at match-making time, if the policy indicates that the cached value (14) has expired, a new value (14) is computed.

3. The method of claims 1 or 2 in which the following rules are followed:
(a) a dynamic property (16) is evaluated only if:
(i) the value (14) of the dynamic property (16) is not cached, or
(ii) the cached value (14) is not valid anymore, and
(b) the dynamic property (16) is evaluated at most once for a given constraint.

4. The method of claim 1 wherein property resolution is independent of any particular representation format of expiration policies which indicate the validity of a cached property value (14).

5. The method of claim 1 wherein the values (14) are computed and cached as long as the offer is valid, thus facilitating the representation of offers in virtual market places which are only available at a certain time or for a certain period of time.

6. A computerized immediate property resolution method (10) encoded on a computer-readable medium wherein values of dynamic properties (16) are calculated and cached for retrieval in a data structure (12) together with any values (48) of static properties, thereby enabling the evaluation of constraints with respect to these values.

7. A deferred property resolution method (10) encoded on a computer-readable medium, the method reducing the frequency of computation of values (14) of dynamic properties (16) which are not actually used by a constraint, by:
(a) deferring property resolution until a value (14) is actually needed; and
(b) extending the validity of cached values for a time utilized to evaluate the constraint.

8. A data structure (12) encoded on a computer-readable medium, for storing dynamic properties (16) and related data for access as required during an evaluation of a constraint in a virtual market place, the data structure including:
(a) offer property sets (32) comprising:
(i) dynamic properties (16) having a name, a dynamic property evaluator reference (25) and associated parameters (26), a type (24), and a value (14), and
(ii) static properties (44) having a name, type (24) and value (48); and
(b) client property sets (33) comprising static properties (44) and, optionally, dynamic properties (16).
